# EUROPEAN PATENT SPECIFICATION

(11) **EP 1 387 911 B1**
(45) Date of publication and mention of the grant of the patent: **20.01.2016**
(21) Application number: 02724331.0
(22) Date of filing: 08.05.2002
(51) Int. Cl.: E04C 2/52, B32B 19/04, E04C 2/292

(54) **SANDWICH BUILDING ELEMENT**
SANDWICH BAUELEMENT
ELEMENT DE CONSTRUCTION EN SANDWICH

(30) Priority: 11.05.2001 FI 20010992
(43) Date of publication of application: 11.02.2004
(73) Proprietor: Paroc Group Oy, 00180 Helsinki (FI)
(72) Inventor: HESELIUS, Lars, FIN-21600 Pargas (FI); WILLMAN, Tarmo, FIN-20780 Kaarina (FI); LYNDERUP, John, DK-2670 Greve Strand (DK); KARLSSON, Dick, FIN-21600 Parainen (FI)
(74) Representative: LEITZINGER OY
(86) International application number: PCT/FI2002/000395
(87) International publication number: WO 2002/092932

(56) References cited:
- WO-A1-00/00704
- WO-A1-00/00704
- WO-A1-00/70161
- CH-A- 494 378
- DE-A1- 4 133 416
- DE-U- 7 408 307
- DE-U1- 29 714 251
- DE-U1- 29 714 251
- FR-A1- 2 784 406
- GB-A- 589 752
- SE-C2- 506 924

## Description

The present invention relates to a sandwich building element, comprising a core member, and surface layers of sheet steel or building board present on the two opposite main surfaces of said core member, said core member being composed of lamellae of mineral wool extending lengthwise of the building element, said surface layers are lamitable on the core member by fixing the same with an adhesive to the opposite main surfaces of the core member said core member consisting of at least two lamellae different in terms of their fire resistance, strength, and/or other properties.

DE 4133416 discloses a sandwich element of the preamble of claim 1. WO00/00704 discloses a insulating element of mineral wool including meander like air channels for providing ventilation into all directions.

It is an object of the present invention to provide an improved sandwich building element, which enables e.g. appropriate planning of junctions, e.g. from the perspective of fireproofing and strength requirements, and which building element is fit for versatile use in various applications, enabling e.g. the installation of various air ducts and pipe systems required by electric cables within the confines of a wall composed of the building elements. In order to fulfil this objective, the inventive building element is characterized in that at least one lamella has integrated therewith at least one separate LVIST (heating, plumbing, ventilation, electrical installation and transmission of information) duct element, and that when the building element is bonded to an adjacent building element said duct element becomes continuous across a junction between the building elements. The term LVIST duct element refers to a duct or channel associated with heating, water supply service, air conditioning, transmission of electricity, or transmission of information.

One of the benefits gained by a building element of the invention Is e.g. that desired parts in the core member of a building element can be provided with desired properties, e.g. one or each of the skirt lamellae may have more strength or rigidity or a better fire resistance than centrally located lamellae, the core member manufacturing costs remaining lower than those for a core member made entirely of a higher-quality material. In addition, according to the invention, it is comparatively easy to manufacture profiled building elements by using lamellae with sizes varying in the direction perpendicular to the building element.

The inventive building element provided with various duct and/or structural support members enables e.g. the implementation of intelligent facades and removable partitions in a comparatively simple fashion.

The lamellae can also have other elements integrated therewith, such as e.g. sound proofing panels for enhanced sound attenuation. The lamellae can also have integrated therewith a fastener or a bracket member applied against the internal face of a surface plate for various engagement requirements. Said fastener or bracket member adheres securely to the internal face of a surface panel in the process of bonding lamellae to the surface panel.

The invention will now be described in more detail with reference to the accompanying drawings, in which:
- Figs. 1a-1d: illustrate schematically a few alternative embodiments for a building element, and
- Fig. 2: shows a building element embodiment, particularly applicable as a ceiling panel.

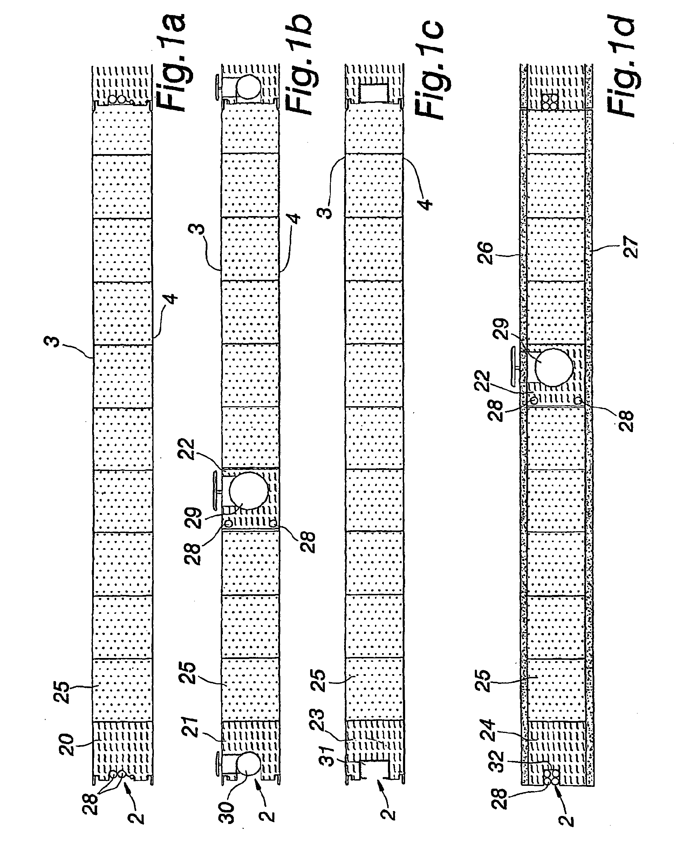

In fig. 1a, one skirt lamella 20 is constructed from a mineral wool material which is stronger and better in terms of its fire-proofing or refractory properties than that used for other lamellae 25 of the core member, in view of reinforcing a junction between building elements to be joined together. The lamella section 20 has additionally ducts or pipe systems 28 integrated therewith, e.g. for electric cables.

In fig. 1b, in addition to a skirt lamella 21, a centrally located lamella 22 is also made from a stronger mineral wool material than lamellae 25 and, furthermore, the skirt lamella 21 has an air duct 30 integrated therewith, and the lamella section 22 has an air duct 29 and channels or pipe systems 28 integrated therewith for electric cables. Regarding the material therefor, the air ducts and/or other channels or pipe systems can be made e.g. of a metal or plastics and integrated with a lamella preferably by bonding.

In fig. 1c, the skirt lamella 23 has integrated therewith a provision 31 for housing, for example, building frame members in concealment within a wall structure. The skirt lamella 23 is made of a material stronger than the other lamellae 25.

Fig. 1d illustrates an embodiment, wherein an outermost lamella 24 is formed with a provision 32 for housing cable pipe systems 28 and, in addition, the core member has a centrally located lamella element 22 provided with an air duct 29 and pipe systems 28 for electric cables. Further in the embodiment of fig. 1d, the surface layer material consists of building board thicker than that surface layer material used in the embodiments of figs. 1a-1c, in which the surface layer material comprises sheet steel, preferably plastic-coated sheet steel. Surface layer materials 26 and 27 may comprise e.g. a board including rock material or a plaster board.

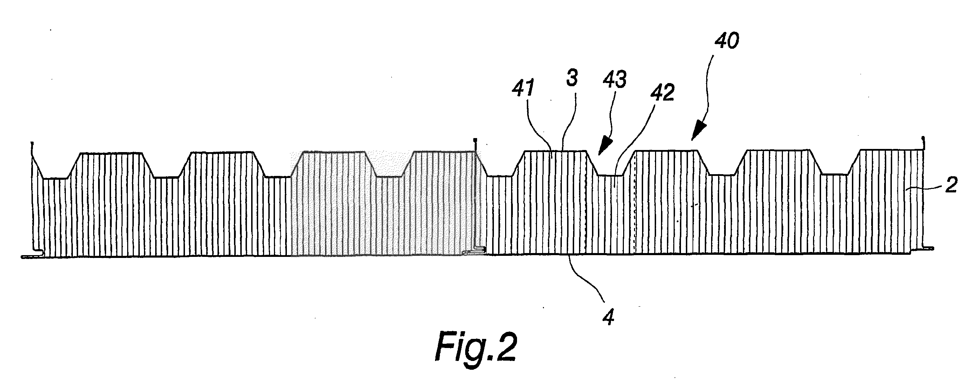

Fig. 2 illustrates a building element 40 suitable for use as a ceiling panel, wherein the core member 2 has its lamellae designed in such a way that the core member has a bottom main surface which is flat and a top main surface which is profiled. Profiling is normally made by using lamellae substantially equal in size to begin with, and by then forming the surface of a core member with cross-sectionally V- or U-shaped grooves 43, for example by cutting or milling. The grooves 43 can also be formed by adding suitably shaped blocks onto the surface of the core member 2. Reference numeral 41 represents a lamella section provided with a flat top surface, and reference numeral 42 a lamella section provided with a groove 43. As a result of the groove system 43, the dimensions of these lamella sections vary in the direction perpendicular to the element 40 and, in the present embodiment, in the lateral direction, as well. Naturally, the groove system 43 can also be made in such a way that the lamella section 41 has a flat top surface which, in a lateral direction of the element, is equal in size to the width of the opening of the groove 43. The top surface layer 3 is designed to be substantially consistent with the profiled contour of the corresponding main surface of the core member 2.

The inventive building elements can be fabricated on a conventional continuous-action line for producing long series of identical elements, or on a so-called semi-continuous line which can be used for making individual elements sequentially in short series, even single pieces. Said semi-continuous method is described in more detail in a co-pending Finnish application filed by the present Applicant on the same date. In this method, the surface layer 3 and 4 applied to each main surface of the core member 2 is sequentially and temporarily bonded to other surface layers 3 and 4 applied to the corresponding main surfaces for providing continuous strings of surface layer, said strings of surface layer being then coupled with the core member 2 for providing a continuous string of building elements. The thus obtained string of building elements is then cut at temporary junctions between the strings of surface layer. Said temporary joining is preferably performed by taping.

Regarding a building element of the invention, it is conceivable that at least one of the surface layers 3, 4 be profiled over all four sides thereof, i.e. over lengthwise edges and crosswise short sides or end zones, in view of making a cartridge element. Profiling of the end zone can also be performed by fitting said zones with separate profiled end elements.

## Claims

1. A sandwich building element, comprising a core member (2), and surface layers (3, 4) of sheet steel or building board present on the two opposite main surfaces of said core member (2), said core member (2) being composed of lamellae of mineral wool extending lengthwise of the building element, wherein said surface layers (3, 4) are lamitable on the core member (2) by fixing the same with an adhesive to the opposite main surfaces of the core member (2), said core member (2) consisting of at least two lamellae (20-25, 41, 42) different from each other in terms of their fire resistance, strength, and/or other properties, **characterized in that** at least one lamella has integrated therewith at least one separate LVIST-duct element (28, 29) e.g. for heating, plumbing, ventilation, electrical installation and/or transmission of information, and that when the building element is bonded to an adjacent building element said duct element (28, 29) becomes continuous across a junction between the building elements.

2. A building element as set forth in claim 1, **characterized in that** the core member (2) has at least one of its main surfaces made profiled by forming the same with grooves (43), and that the surface layers (3, 4) are adapted to substantially comply with the surface contour of the core member (2).

3. A building element as set forth in claim 2, **characterized in that** the grooves (43) have been cut or milled.

4. A building element as set forth in claim 2, **characterized in that** the grooves (43) have been made by adding suitably shaped blocks to the surface of the core member.

5. A building element as set forth in any of the preceding claims, **characterized in that** at least one of the surface layers (3, 4) is profiled as desired over all sides thereof.

6. A building element as set forth in claim 5, **characterized in that** profiling of the short sides (end zones) of said all-round profiled surface layer is performed by fitting the same with separate profiled end elements.

## Patentansprüche

1. Sandwich-Bauelement, welches ein Kernelement (2) und Oberflächenschichten (3, 4) aus Stahlblech oder Baupappe, die auf den beiden gegenüberliegenden Hauptoberflächen des Kernelementes (2) vorliegen, umfasst, wobei das Kernelement (2) aus Mineralwolllamellen zusammengesetzt ist, die sich in der Längsrichtung des Bauelementes erstrecken, wobei die Oberflächenschichten (3, 4) auf das Kernelement (2) laminierbar sind, indem sie mit einem Klebstoff an den gegenüberliegenden Hauptoberflächen des Kernelementes (2) befestigt werden, wobei das Kernelement (2) aus mindestens zwei Lamellen (20-25, 41, 42) besteht, die sich hinsichtlich ihres Feuerwiderstandes, ihrer Festigkeit und/oder anderer Eigenschaften voneinander unterscheiden, **dadurch gekennzeichnet, dass** mindestens eine Lamelle mindestens ein separates LVIST-Kanalelement (28, 29), z.B. für Heizung, Sanitär, Lüftung, Elektroinstallation und/oder Übertragung von Informationen, damit integriert aufweist und dass, wenn das Bauelement mit einem benachbarten Bauelement verbunden wird, das Kanalelement (28, 29) über eine Verbindungsstelle zwischen den Bauelementen hinweg durchgehend wird.

2. Bauelement nach Anspruch 1, **dadurch gekennzeichnet, dass** mindestens eine der Hauptoberflächen des Kernelementes (2) mit einem Profil versehen wurde, indem sie mit Rillen (43) ausgebildet wurde, und dass die Oberflächenschichten (3, 4) dazu geeignet sind, im Wesentlichen der Oberflächenkontur des Kernelementes (2) zu entsprechen.

3. Bauelement nach Anspruch 2, **dadurch gekennzeichnet, dass** die Rillen (43) geschnitten oder gefräst wurden.

4. Bauelement nach Anspruch 2, **dadurch gekennzeichnet, dass** die Rillen (43) erzeugt wurden, indem geeignet geformte Blöcke zu der Oberfläche des Kernelementes hinzugefügt wurden.

5. Bauelement nach einem der vorhergehenden Ansprüche, **dadurch gekennzeichnet, dass** mindestens eine der Oberflächenschichten (3, 4) wie gewünscht über alle Seiten davon mit einem Profil versehen ist.

6. Bauelement nach Anspruch 5, **dadurch gekennzeichnet, dass** die Profilbildung der kurzen Seiten (Endzonen) der rundum mit Profil versehenen Oberflächenschicht durchgeführt wird, indem sie mit separaten, mit Profil versehenen Endelementen bestückt wird.

## Revendications

1. Elément de construction en sandwich, comprenant un élément central (2), et des couches de surface (3, 4) en tôle d'acier ou en panneau de construction présentes sur les deux surfaces principales opposées desdites couches de surface (3, 4), ledit élément central (2) étant composé de lamelles de laine minérale s'étendant dans le sens de la longueur de l'élément de construction, dans lequel lesdites couches de surface (3, 4) peuvent être contrecollées sur l'élément central (2) en les fixant avec un adhésif sur les surfaces opposées principales de l'élément central (2), ledit élément central (2) se composant d'au moins deux lamelles (20-25, 41, 42) différentes l'une de l'autre en termes de résistance au feu, de résistance aux sollicitations externes et/ou d'autres propriétés, **caractérisé en ce qu'**au moins une lamelle est intégrée à au moins un élément de conduit LVIST distinct (28, 29), par exemple pour le chauffage, pour la plomberie, pour la ventilation, pour l'installation électrique et/ou pour la transmission d'informations, et **en ce que**, lorsque l'élément de construction est lié à un élément de construction adjacent, ledit élément de conduit (28, 29) devient continu à travers une jonction entre les éléments de construction.

2. Elément de construction selon la revendication 1, **caractérisé en ce que** l'élément central (2) a au moins l'une de ses surfaces principales qui est rendue profilée en la formant avec des rainures (43), et **en ce que** les couches de surface (3, 4) sont aptes à suivre sensiblement le contour de surface de l'élément central (2).

3. Elément de construction selon la revendication 2, **caractérisé en ce que** les rainures (43) sont découpées ou fraisées.

4. Elément de construction selon la revendication 2, **caractérisé en ce que** les rainures (43) sont constituées en ajoutant des blocs de forme appropriée à la surface de l'élément central.

5. Elément de construction selon l'une quelconque des revendications précédentes, **caractérisé en ce qu'**au moins l'une des couches de surface (3, 4) est profilée comme cela est souhaité sur tous ses côtés.

6. Elément de construction selon la revendication 5, **caractérisé en ce que** le profilage des côtés courts (zones d'extrémité) de ladite couche de surface profilée tout autour est effectué en les dotant d'éléments d'extrémité profilés distincts.
